(19) Europäisches Patentamt
European Patent Office
Office européen des brevets

(11) **EP 1 236 023 B1**

(12) **EUROPÄISCHE PATENTSCHRIFT**

(45) Veröffentlichungstag und Bekanntmachung des Hinweises auf die Patenterteilung:
**05.04.2006 Patentblatt 2006/14**

(21) Anmeldenummer: **00974458.2**

(22) Anmeldetag: **25.10.2000**

(51) Int Cl.:
*G01D 5/26* (2006.01)      *G01S 3/782* (2006.01)

(86) Internationale Anmeldenummer:
**PCT/EP2000/010531**

(87) Internationale Veröffentlichungsnummer:
**WO 2001/038828 (31.05.2001 Gazette 2001/22)**

(54) **WINKELMESSSYSTEM**

ANGLE MEASURING SYSTEM

SYSTEME PANTOMETRE

(84) Benannte Vertragsstaaten:
**AT BE CH CY DE DK ES FI FR GB GR IE IT LI LU MC NL PT SE**

(30) Priorität: **26.11.1999 DE 19956912**

(43) Veröffentlichungstag der Anmeldung:
**04.09.2002 Patentblatt 2002/36**

(73) Patentinhaber: **Dr. Johannes Heidenhain GmbH 83292 Traunreut (DE)**

(72) Erfinder:
• **TONDORF, Sebastian D-83329 Waging (DE)**
• **THIEL, Jürgen 83278 Traunstein (DE)**
• **BRAASCH, Jan D-83308 Trostberg (DE)**
• **SEYFRIED, Volker 83352 Altenmarkt (DE)**
• **HOLZAPFEL, Wolfgang 83119 Obing (DE)**

(56) Entgegenhaltungen:
**EP-A- 0 241 374          DE-C- 19 713 336
GB-A- 2 271 633          US-A- 4 725 146**

**Beschreibung**

Die Erfindung betrifft ein Winkelmesssystem zur berührungslosen Winkelmessung.

Aus der europäischen Patentanmeldung Nr. 00115881.5 der Anmelderin ist ein Positionsmesssystem mit einem sogenannten Mixed-Amplitude-Phase-Gitter, kurz MAP-Gitter, bekannt, das aus in Messrichtung alternierend angeordneten kombinierten Amplituden- und Phasenstrukturen besteht. Dadurch trägt im wesentlichen die $\pm 1$. Beugungsordnung zum Ausgangssignal des Gitters bei, andere Beugungsordnungen werden im wesentlichen unterdrückt.

Aus dem Aufsatz von R. M. Pettigrew, erschienen in SPIE Vol. 136, 1st European Congress on Optics Applied to Metrology (1977), Seiten 325 - 332, sind die Grundlagen der Geometrischen- und Beugungs-Optik an einem Gitter bekannt. Insbesondere ist daraus bekannt, das im geometrischen Bild eines Gitters Talbot-Ebenen existieren, in denen das Gitter abgebildet wird, d.h. die Modulation des Lichts entspricht in einer Talbot-Ebene im wesentlichen seiner Modulation unmittelbar hinter dem Gitter. Zwischen Talbot-Ebenen treten Nullstellen der Modulation und Phasensprünge auf. Im Beugungsbild hingegen treten keine Phasensprünge auf und auch die Modulation des Lichts durch das Gitter weist keine Nullstellen auf.

Aus der US 5,196 900 wird durch ein Kamerasystem ein Winkelmesssystem realisiert, bei dem eine Linse benutzt wird, um eine punktförmige Lichtquelle auf einem zweidimensionalen photosensitiven Feld abzubilden. Nachdem das rotationssymmetrische Zentrum der Linse des Winkelmesssystems ermittelt wurde und dadurch das Winkelmesssystem kalibriert wurde, können zwei Winkel gleichzeitig berührungslos bestimmt werden. Hierfür ist eine Bildverarbeitungseinheit vorgesehen, die für jede Lichtquelle zweidimensionale Winkelwerte ermittelt. Weiterhin ist ein Prozessor vorgesehen, um für jede Lichtquelle deren Koordinaten im Raum zu berechnen. Die Genauigkeit wird dadurch verbessert, dass eine statistische Analyse der vom zweidimensionalen photosensitiven Feld durch benachbarte Feldelemente ermittelten Intensitätswerte erfolgt.

Aus der US 5,805,287 ist ein Verfahren und eine Anordnung zur Positions-und Lagebestimmung von mehreren Objekten relativ zueinander bekannt. Dabei werden mindestens zwei Kameras mit elektro-optischen Sensoren benötigt und ein Netzwerk aus Referenzpunkten, deren Positionen entweder bekannt sind oder bestimmt werden, indem mindestens eine Kamera aus verschiedenen Positionen im Raum die Projektionen der Referenzpunkte ermittelt. Anschließend werden mittels der bekannten Positionen der Referenzpunkte die Kamerapositionen bestimmt. Die Positionen der Objekte relativ zueinander werden dann bestimmt, indem ein Testwerkzeug mit mindestens einem Punkt des Objekts in Kontakt gebracht wird und Messwerte für das Testwerkzeug mittels mindestens zweier Kameras in bekannten Positionen ermittelt werden.

Bei der US 5,196 900 und bei der US 5,805,287 ist von Nachteil, dass auf dem zweidimensionalen photoempfindlichen Feld mittels der Linse die Lichtquelle nur in einem einzigen Punkt abgebildet wird und dadurch nur wenige Pixel eine Ortsinformation der Lichtquelle liefern. Unvermeidliches Rauschen führt in diesem Fall zu erheblichen Unsicherheiten bei der Positionsbestimmung. Neben der ungenügenden Genauigkeit ist auch der relativ große Aufwand nachteilig, der zur Positionsbestimmung erforderlich ist. So werden mindestens zwei Kameras benötigt, um einen Positionswert zu ermitteln. Weiterhin erfolgt in den Kameras eine Abbildung mittels Objektiv, was zu einer großen Messunsicherheit führt. Das Verhältnis von Auflösung zu Messbereich liegt bei derartigen Systeme nur in einem Bereich von $\geq 10^{-4}$.

Aus der DE 39 38 935 C2 ist ein Bewegungsmessverfahren und eine Einrichtung zu dessen Durchführung bekannt. Licht einer ortsfesten Lichtquelle scheint auf ein in Messrichtung bewegliches optisches Gitter, wodurch Beugung auftritt. In einem definierten Abstand zum optischen Gitter ist ein relativ zur Lichtquelle ortsfester Optodetektor angeordnet, der die Intensität des gebeugten Lichts detektiert. Wird das zwischen Lichtquelle und Optodetektor angeordnete optische Gitter in Messrichtung bewegt, wandern die Maxima des Beugungsbildes über den Optodetektor und erzeugen zur Bewegung in Messrichtung proportionale Modulationen im Ausgangssignal des Optodetektors.

Dabei ist von Nachteil, dass die Abstände zwischen Lichtquelle, optischem Gitter und Optodetektor nur in eng begrenzten Bereichen variieren dürfen, da beispielsweise die Modulationstiefe des im Optodetektor detektierten Lichts abhängig ist von dem Abstand zwischen Optodetektor und optischem Gitter. Würde sich der Abstand zwischen Optodetektor und Lichtquelle deutlich ändern, können Phasensprünge und Verlust der Modulation auftreten. Daher ist das offenbarte Verfahren und die offenbarte Anordnung nicht für Winkelmesssysteme geeignet, bei denen sich die Lage und Entfernung der Lichtquelle relativ zum Optodetektor in weiten Bereichen verändert.

Aus der US 4,218,615 ist ein optischer inkrementaler Drehgeber bekannt, bei dem durch eine Lichtquelle ein Spalt beleuchtet wird. Das durch den Spalt hindurchtretende Licht beleuchtet ein erstes Gitter, das relativ zur Lichtquelle und dem Spalt feststeht. Von diesem Gitter liegt in den Talbot-Ebenen ein Abbild vor. Ein zweites, relativ zum ersten Gitter in Messrichtung verschiebbares Gitter wird in einer der Talbot-Ebenen angeordnet. Durch die Verschiebung dieses zweiten Gitters relativ zum ersten Gitter in Messrichtung wird die Amplitude des auf einen hinter dem zweiten Gitter angeordneten Photodetektor abhängig von der Verschiebung des zweiten Gitters relativ zum ersten Gitter verändert. Dadurch sind die vom Photodetektor ausgegebenen Spannungsmodulationen ein Maß für die relative Verschiebung vom zweiten relativ zum ersten Gitter in Messrichtung.

**EP 1 236 023 B1**

Dies weist den Nachteil auf, dass der Abstand zwischen zweitem und erstem Gitter nur in sehr engen Bereichen schwanken darf, da sonst die Talbot-Ebene verlassen wird und eine Verschiebung des zweiten relativ zum ersten Gitter zu keiner ausreichenden Modulation der Lichtintensität und damit zu keiner ausreichenden Spannungsmodulation im Ausgangssignal des Photodetektors führt. Daher ist das offenbarte Verfahren und die offenbarte Anordnung nicht für Winkelmesssysteme geeignet, bei denen sich die Lage und Entfernung der Lichtquelle relativ zum Optodetektor in weiten Bereichen verändert.

Aus der US 5,900,936 ist ein Verfahren und eine Anordnung zur Messung von Oberflächendeformationen und Oberflächenverlagerungen bekannt. Hierfür sind in einem bestimmten Abstand zwei Quellen für kohärentes Licht angeordnet, die beide in Richtung eines Optodetektors strahlen. Der Optodetektor ist an der Oberfläche angeordnet, deren Deformation oder Verlagerung gemessen werden soll. Dort entsteht ein Interferenzmuster mit in Messrichtung wechselnder Intensität des Lichts der beiden kohärenten Lichtquellen. Die durch eine Bewegung des Optodetektors verursachten Intensitätsänderungen werden durch einen Prozessor ausgewertet.

Dabei ist von Nachteil, dass mindestens eine Quelle für kohärentes Licht benötigt wird, die relativ teuer ist. Weiterhin nachteilig ist, dass bei Verwendung eines Detektors, der gegenüber der Lichtquelle wesentlich verkippt wird, nur eine einzige Phase des auftreffenden Lichts detektiert werden kann.

Schließlich ist aus der EP 331 353 A2 ein Messsystem bekannt, das zur Erfassung von räumlichen Winkeländerungen zwischen einer Sende- und Empfangseinheit geeignet ist. Während sendeseitig an einem ersten Objekt u.a. eine Sendeeinheit, z.B. in Form einer geeigneten Lichtquelle angeordnet ist, wird an einem zweiten Objekt eine Detektoreinheit mit einem vorgeordneten Gitter befestigt; das Gitter ist hierbei als bekanntes Amplitudengitter ausgebildet. Als Nachteil der vorgeschlagenen Anordnung ist wiederum das Verhalten im Fall eines ggf. stark schwankenden Abstandes zwischen den beiden Objekten anzuführen, da dann detektorseitig keine hinreichende Signalmodulation mehr sichergestellt werden kann.

Aufgabe der vorliegenden Erfindung ist es daher, ein Winkelmesssystem anzugeben, welches eine möglichst direkte Winkelbestimmung von einem ersten Objekt relativ zu einem zweiten Objekt ermöglicht. Insbesondere ist hierbei wünschenswert, dass der Abstand zwischen erstem und zweitem Objekt und somit der Abstand zwischen einzelnen Baugruppen des Messsystems in weiten Bereichen variieren kann.

Diese Aufgabe wird durch ein Winkelmesssystem mit den im Anspruch 1 angegebenen Merkmalen gelöst.

Ferner wird diese Aufgabe durch ein Winkelmesssystem mit den im Anspruch 2 angegebenen Merkmalen gelöst.

Weiterbildungen und vorteilhafte Ausgestaltungen des erfindungsgemäßen Winkelmesssystems sind den jeweils abhängigen Ansprüchen zu entnehmen.

Das erfindungsgemäße Winkelmesssystem weist den Vorteil auf, dass im Fall des Einsatzes im Arbeitsraum einer Werkzeugmaschine eine Kompensation thermischer Ausdehnungen und Verformungen einer Maschine nicht erforderlich ist, da das Winkelmesssystem im wesentlichen unmittelbar die Winkeländerung zwischen den beiden Objekten erfasst, beispielsweise Werkzeug und Werkstück. Für diese Funktion sind lediglich die Bauelemente Lichtquelle, Gitter und Optosensor erforderlich. Dadurch ist das erfindungsgemäße Winkelmesssystem kompakt und preisgünstig realisierbar.

Ein weiterer Vorteil besteht darin, dass der Abstand zwischen einer ersten und einer zweiten Baugruppe des Winkelmesssystems, die an einem ersten und zweiten Objekt, beispielsweise einer Werkzeugmaschine, befestigt sind, in weiten Bereichen schwanken kann, wodurch ein großes Messvolumen des Winkelmesssystems ermöglicht wird, beispielsweise im Arbeitsraum einer Werkzeugmaschine.

Ferner ist als Vorteil anzuführen, dass auch eine eventuelle Verkippung der Baugruppen des erfindungsgemäßen Winkelmesssystems die Winkelmessung nicht fehlerhaft beeinflusst.

Ein weiterer Vorteil besteht darin, dass bei einer geeigneten Anordnung von mindestens drei Winkelmesssystemen eine direkte Bestimmung einer Position im Raum erfolgen kann. Mit noch mehr erfindungsgemäßen Winkelmesssystemen kann auch die Lage im Raum detektiert werden. Zudem ist die schwierige Bestimmung von Ungenauigkeiten in den mechanischen Baugruppen nicht mehr erforderlich, beispielsweise von Gelenkfehlern bei Werkzeugmaschinen mit Parallelkinematiken oder von Führungsfehlern, die bei einer achsweisen Positionierung von mindestens zwei Achsen auftreten und bei einer achsweisen Positionsmessung nicht erfasst werden können.

Weitere Vorteile sowie Einzelheiten des erfindungsgemäßen Winkelmesssystems sowie des erfindungsgemäßen Verfahrens ergeben sich aus der nachfolgenden Beschreibung der Ausführungsbeispiele anhand der Zeichnungen. Dabei zeigt:

Fig. 1    eine erste mögliche Ausgestaltung eines efindungsgemäßen Winkelmesssystems,

Fig. 2    eine zweite mögliche Ausgestaltung eines erfindungsgemäßen Winkelmesssystems,

Fig. 3    eine erste erfindungsgemäße Realisierungsmöglichkeit einer Auswerteelektronik,

Fig.4    eine zweite erfindungsgemäße Realisierungsmöglichkeit einer Auswerteelektronik,

Fig. 5    ein Ausführungsbeispiel für ein zweidimensionales Mixed-Amplitude-Phase-Gitter und

Fig. 6    ein Ausführungsbeispiel für ein eindimensionales Mixed-Amplitude-Phase-Gitter.

Es soll zunächst ein Überblick über das erfindungsgemäße Winkelmesssystem und dessen Funktionsweise gemäß einem ersten Ausführungsbeispiel gegeben werden. Anschließend werden die einzelnen Baugruppen detailliert mit alternativen Realisierungsmöglichkeiten beschrieben. Danach wird kurz ein alternatives Ausführungsbeispiel erläutert.

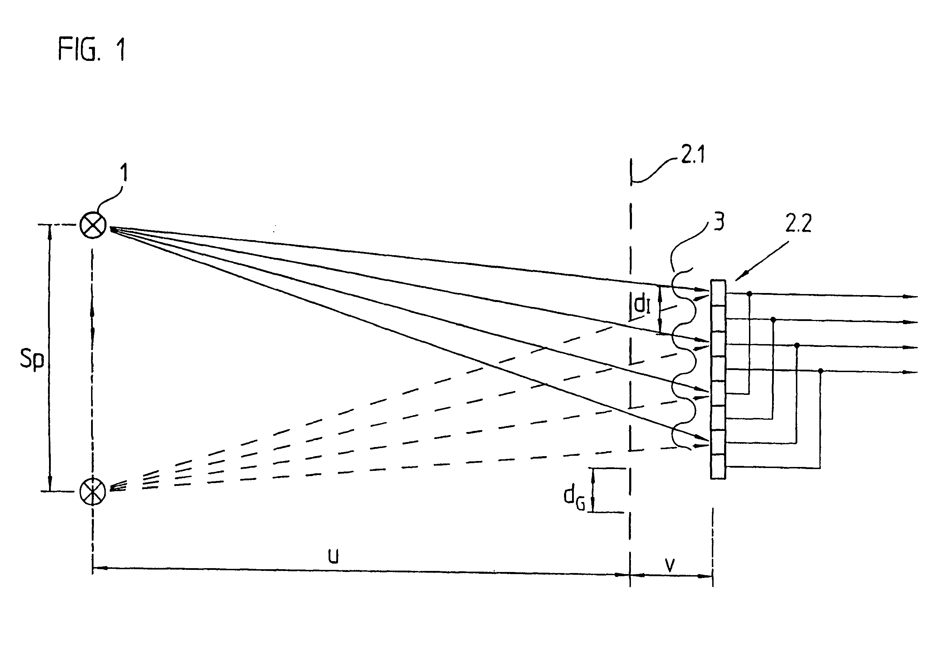

In Fig. 1 ist ein erstes mögliches Ausführungsbeispiel für ein erfindungsgemäßes Winkelmesssystem dargestellt. Um den Winkel zwischen zwei relativ zueinander beweglichen Objekten zu bestimmen, wird an einem ersten, beweglichen Objekt eine Lichtquelle 1 befestigt. An einem zweiten beweglichen oder feststehenden Objekt im - in bestimmten Grenzen variierenden - Abtastabstand u vom ersten Objekt wird eine Detektoreinheit 2 angeordnet, die das Licht der Lichtquelle 1 detektiert. Selbstverständlich können dabei Detektoreinheit 2 und Lichtquelle 1 auch miteinander vertauscht werden.

Erfolgt die Anwendung des erfindungsgemäßen Winkelmesssystems an einer Werkzeugmaschine, wird als erstes bewegliches Objekt der sich nicht drehende Spindelkopf der Werkzeugmaschine gewählt, wobei die Lichtquelle 1 bevorzugt in der Nähe der Werkzeugeinspannung angeordnet wird und als zweites Objekt wird vorteilhaft die Einspannvorrichtung für das Werkstück gewählt, wobei die Detektoreinheit 2 bevorzugt in der Nähe des Werkstücks angeordnet wird. Besonders vorteilhaft gemäß der Erfindung ist, dass je näher Lichtquelle 1 und Detektor 2 am Berührungspunkt von Werkzeug mit Werkstück angeordnet sind, um so mehr das Messergebnis verfälschende Einflüsse unmittelbar im Messergebnis berücksichtigt werden. Dadurch kann eine Kompensation derartiger Einflüsse (insbesondere thermische Ausdehnung und mechanische Ungenauigkeiten) weitgehend entfallen. Dies ist wegen der erfindungsgemäßen Ausgestaltung des Winkelmesssystems möglich, bei dem Lichtquelle 1 und Detektoreinheit 2 an unterschiedlichen Objekten möglichst nahe dem Punkt angeordnet werden, in dem die Winkeländerung des ersten relativ zum zweiten Objekt bestimmt werden soll.

Die Lichtquelle 1 strahlt divergent ab und wird vorzugsweise durch eine Leuchtdiode realisiert. Der Divergenzwinkel der Lichtquelle 1 wird so groß gewählt, dass die Detektoreinheit 2 bei jeder möglichen eigenen Position und Lage sowie jeder möglichen Position und Lage der Lichtquelle 1 im Messvolumen mit ausreichender Intensität bestrahlt wird.

Die Detektoreinheit 2 besteht aus einem Gitter 2.1 mit der Gitterkonstanten $d_G$ sowie einem im Abstand v vom Gitter 2.1 angeordneten, bevorzugt strukturierten Photodetektor 2.2, der mehrere Einzelphotoelemente mit ähnlichen oder gleichen Abmessungen aufweist. Alternativ kann der strukturierte Photodetektor 2.2 auch durch ein einziges Photoelement, vor das ein Gitter angeordnet ist, realisiert werden. Sollen mehrere Phasenlagen der Strahlungsintensität des auf den Photodetektor 2.2 treffenden Lichts ermittelt werden, sind mehrere elektrisch getrennte Einzelphotoelemente zu verwenden. Diese können gegeneinander versetzt sein oder bei einem strukturierten Photodetektor 2.2 ineinander liegen.

Das von der Lichtquelle 1 bestrahlte Gitter 2.1 erzeugt auf dem strukturierten Photodetektor 2.2 ein Intensitätsstreifensystem 3 mit der Periode $d_I$. Die Lage der Intensitätsstreifen hängt von der Winkellage der Lichtquelle 1 relativ zur Detektoreinheit 2 ab. Verschiebt sich die Lichtquelle 1 relativ zur Detektoreinheit 2 in Richtung des Gittervektors des Gitters 2.1, wandert das Intensitätsstreifensystem 3 über den Photodetektor 2.2. Der Gittervektor steht dabei senkrecht auf einer Gitterlinie und weist in Richtung einer anderen Gitterlinie. Der Abstand, den die Lichtquelle 1 in Richtung des Gittervektors bewegt werden muss, damit auf dem Photodetektor 2.2 das Intensitätsstreifensystem 3 um eine Periode $d_I$ verschoben wird, wird im folgenden als virtuelle Signalperiode SP bezeichnet.

Die erfindungsgemäße Verwendung eines Gitters 2.1 als abbildendes Element zwischen Lichtquelle 1 und Photodetektor 2.2 bietet den Vorteil, dass nicht nur ein einziges Bild der Lichtquelle 1 auf dem Photodetektor 2.2 entsteht, sondern viele, wodurch die Auflösung wesentlich gesteigert werden kann.

Im folgenden wird das Winkelmesssystem insgesamt und dessen Funktion beschrieben.

Eine günstige Konfiguration ist beispielsweise durch folgende Dimensionierung für das erfindungsgemäße Winkelmesssystem gegeben:

| | |
|---|---|
| Abtastabstand u von Lichtquelle 1 zur Detektoreinheit 2 | 0,5-1,5 m |
| Abstand v von Gitter 2.1 zum strukturierten Photodetektor 2.2 | 80 mm |
| Gitterkonstante $d_G$ des Gitters 2.1 (für das geometrische Bild bzw. Beugungsbild) | 148 μm / 296 μm |
| Detektorperiode $d_D$ | 160 μm |
| Ausdehnung der Lichtquelle 1 | 400 μm |

Tabelle fortgesetzt

| | |
|---|---|
| Virtuelle Signalperiode $SP_0$ im Abtastabstand $u_0$=1 m | 2 mm |
| Intensitätsperiode am strukturierten Photodetektor 2.2 (abhängig vom Abtastabstand u) | 156 $\mu$m - 171 $\mu$m |
| Zahl der Detektorperioden $d_D$ | 5 |
| Zahl der Einzelphotoelemente | 20 |
| Phasenwinkel zwischen den Einzelphotoelementen | 90° |

Zur Ausgestaltung des erfindungsgemäßen Winkelmesssystems stehen eine Vielzahl von Variationsmöglichkeiten offen, die beliebig miteinander kombiniert werden können. Einige werden im folgenden erläutert.

Es können zwei verschiedene Abbildungsvarianten durch das Winkelmesssystem benutzt werden, das Beugungsbild, bei dem die Modulation nicht verschwindet und das geometrische Bild, bei dem nur in der Nähe bestimmter Abstände (Talbot-Abstände) zum Gitter 2.1 ein kontrastreiches Bild des Gitters 2.1 vorliegt. Im geometrischen Bild verwendet man vorteilhaft ein Amplitudengitter oder ein Phasengitter mit 90° Phasenhub zur Abbildung, dessen Gitterkonstante $d_G$ die folgenden Beziehungen gelten:

$$d_G = v/(u_0+v)\cdot SP_0 \text{ und } d_G = u_0/(u_0+v)\cdot d_D$$

Dabei ist $u_0$ der mittlerer Abtastabstand und $SP_0$ ist die mittlere, virtuelle Signalperiode im Abtastabstand $u_0$. Im geometrischen Bild ergeben sich jedoch nur bei bestimmten Abtastabständen u mit

$$1/u + 1/v = 1/(n\cdot z_T)$$

hohe Modulationsgrade der Abtastsignale, wobei $z_T = d_G^2/\lambda$ als Talbotabstand bezeichnet wird. Von einem Abstandsbereich mit hoher Modulation zum nächsten Abstandsbereich mit hoher Modulation tritt eine Nullstelle in der Modulation und auch ein Phasensprung von 180° auf, so dass nur ein beschränkter Abstandsbereich (nur ein fester Index n) genutzt werden kann.

Vorteilhafter ist daher das Beugungsbild zu wählen, da hier kein Phasensprung zwischen den Abstandsbereichen mit hoher Modulation auftritt. Das Gitter wird hier z. B. als Phasengitter mit 184° Phasenhub und gleicher Steg-und Lückenbreite ausgebildet. Für die Dimensionierung der Gitterkonstanten $d_G$ gelten entsprechende Vorschriften:

$$d_G = 2\cdot u_0/(u_0+v)\cdot d_D \text{ und } d_G \simeq 2\cdot v/(u_0+v)\cdot SP_0$$

Vorteilhaft bei der Verwendung des Beugungsbildes ist, dass keine Phasensprünge bei der Variation des Abstands zwischen Lichtquelle 1 und Detektor 2 auftreten. In der Praxis schwankt aber der Modulationsgrad erheblich bei Abstandsänderungen zwischen Lichtquelle 1 und Detektoreinheit 2. Ursache dafür sind höhere Beugungsordnungen des Abbildungsgitters 2.1. Durch die Verwendung von kombinierten Phasen/Amplitudengittern als Gitter 2.1 wird über den gesamten Abstandsbereich ein konstant hoher Modulationsgrad ermöglicht. Für die Wahl der Gitterkonstanten $d_G$ gelten auch bei kombinierten Phasen/Amplitudengittern die gleichen Vorschriften wie im Beugungsbild.

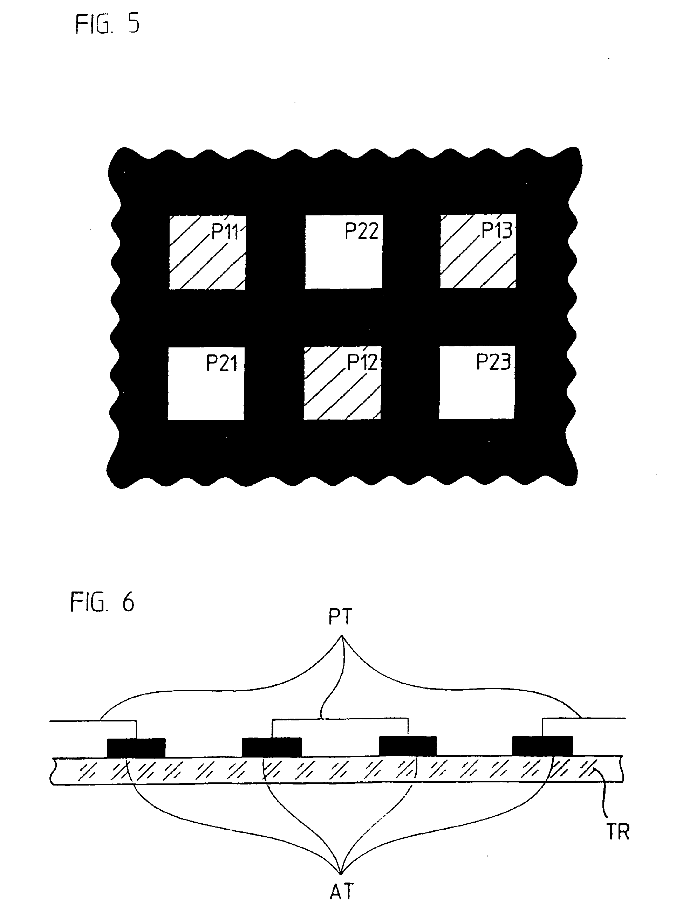

Um die Signalqualität des Ausgangssignals des Photodetektors 2.2 zu verbessern, werden Oberwellen, die durch höhere Beugungsordnungen verursacht werden, gedämpft. Dafür wird vorteilhaft am Gitter 2.1 eine spezielle Filterstruktur zur Filterung von Oberwellen angeordnet. Als derartige Oberwellenfilter eignen sich alle aus dem Stand der Technik bereits bekannten optischen Oberwellenfilter. Dabei wird der Oberwellenfilter in das verwendete MAP-Gitter 2.1, das weiter unten erläutert wird, integriert ausgeführt. Beispielsweise werden zusätzlich zu der in Fig. 6 gezeigten Amplitudenteilung AT noch weitere lichtundurchlässige Stege parallel zur vorhandenen Amplitudenteilung AT vorgesehen, die aber wesentlich schmaler als die vorhandene Amplitudenteilung AT sind. Dies bewirkt beispielsweise, dass zusätzlich insbesondere die fünfte und siebte Beugungsordnung gedämpft wird. Dadurch kann die Amplitude der dritten Signaloberwelle im Ausgangssignal des Photodetektors 2.2 praktisch zum Verschwinden gebracht werden.

Alternativ kann der Oberwellenfilter auch am strukturierten Photodetektor 2.2 oder an der Lichtquelle 1 des zweiten Ausführungsbeispiels angeordnet sein. Dies weist jedoch den Nachteil auf, dass dann die Filterfunktion abhängig ist von dem Abstand zwischen Lichtquelle 1 und Photodetektor 2.2. Um diese Abhängigkeit möglichst vollständig zu vermeiden, wird die Empfindlichkeit des Photodetektors 2.2 entsprechend beispielsweise einem um die Mitte symmetrischen Hammingfensters modifiziert. Anstelle des Hammingfensters können alle aus dem Bereich der Fouriertransformation bekannten Fenster-Funktionen verwendet werden. Dafür ist beispielsweise ein Hamming-Fenster geeignet, das bei einem strukturierten Photodetektor 2.2 realisiert wird, indem die Längen der Photoelemente des Photodetektors 2.2 parallel zu den Gitterlinien des Gitters 2.1 unterschiedlich sind. Die Länge der Photoelemente wird gemäß der Funktion eines Hamming-Fensters bestimmt.

Im folgenden wird die erfindungsgemäße Lichtquelle 1 detailliert erläutert.

Die Lichtquelle 1 wird derart ausgestaltet, dass für jede mögliche Stellung der Lichtquelle 1 relativ zum Detektor 2 der Emissionsschwerpunkt der Lichtstrahlen möglichst an der gleichen Stelle liegt. Dies wird beispielsweise durch eine zumindest abschnittsweise flächige, zylinderförmige oder kugelförmige Lichtquelle 1 erreicht. Die Ausdehnung der Lichtquelle 1 sollte vorteilhaft kleiner ungefähr der virtuellen Signal periode SP sein.

Weiterhin kann der Emissionspunkt der Lichtquelle 1 durch eine Optik derart verschoben werden, dass ein virtueller Emissionspunkt erzeugt wird. Dadurch kann eine Messung möglichst unmittelbar am gewünschten Ort, beispielsweise der Spindel, erfolgen. Weiterhin kann durch eine entsprechende Optik auch die Divergenz verändert werden.

Es besteht auch die Möglichkeit, nicht unmittelbar den Ort der Erzeugung der Lichtstrahlung als Lichtquelle 1 zu benutzen, sondern die Lichtstrahlung über Lichtwellenleiter an einen oder mehrere für die Lichtquelle 1 günstigen Orte, insbesondere nahe am Werkstück oder nahe am Werkzeug, zu leiten. Dann wird das Ende des Lichtleiters, an dem die Lichtstrahlung divergent austritt als Lichtquelle 1 definiert. Dadurch hat man den Vorteil einer kleinen, runden strahlenden Fläche mit einem vom Winkel unabhängigen Emissionsschwerpunkt. Besonders geeignet ist dies auch für kleine Messvolumen, bei denen eine Lichtquelle 1 mit ausreichender Strahlungsintensität einen nicht unerheblichen Platzbedarf hätte. Die Lichtquelle 1 könnte dann entfernt vom Messvolumen angeordnet werden und es könnten mehrere Lichtwellenleiter die Strahlung einer einzigen Lichtquelle 1 an unterschiedliche, für das Winkelmesssystem günstig Stellen weiterleiten.

Als Lichtquelle 1 eignet sich grundsätzlich jede, die eine kleine Leuchtfläche aufweist. Die maximale Ausdehnung der Lichtquelle sollte 75% der minimal auftretenden, virtuellen Signalperiode SP nicht überschreiten, da sonst die Modulation zu gering ist. Falls auch Drehungen zwischen Lichtquelle 1 und Detektoreinheit 2 auftreten, wählt man vorteilhaft für die Lichtquelle 1 eine runde Leuchtfläche. Besonders geeignete Lichtquellen 1 sind Leuchtdioden, Halbleiterlaserdioden einschließlich vertikal emittierender VCSELS, Bogen-und andere Entladungslampen und Glühlampen. Um die Einhaltung von Laserschutzbestimmungen zu erleichtern, können Lichtquellen im sichtbaren Wellenlängenbereich oder auch im sogenannten "Eye-safe"-Bereich vorteilhaft sein.

In Fällen, bei denen keine relevanten Drehungen zwischen der Lichtquelle 1 und der Detektoreinheit 2 auftreten, ist es nicht unbedingt erforderlich, dass die Lichtquelle 1 vollständig rund ist. Insbesondere kann sie dann eine längliche Form parallel zum Intensitätsstreifensystem 3 auf dem Detektor 2 besitzen oder senkrecht hierzu strukturiert sein. So ist z. B. eine Zeile aus LEDs oder Laserdioden im Abstand der virtuellen Gitterperiode $SP_0$ als Lichtquelle 1 denkbar, wodurch sich gegenüber dem oben beschriebenen System mit runder Lichtquelle 1 eine deutlich höhere Lichtausbeute erreichen lässt.

Im folgenden wird das verwendete Gitter 2.1 beschrieben.

Die Wahl des Gitters 2.1 ist von entscheidender Bedeutung für das Winkelmesssystem. Bevorzugt werden Sinusgitter oder MAP-Gitter verwendet; zu derartigen Gittern wird ergänzend ausdrücklich auf die bereits eingangs erwähnte europäische Patentanmeldung Nr. 00115881.5 verwiesen. Unter einem Sinusgitter wird dabei ein kombiniertes Amplituden-Phasen-Gitter verstanden, das einen $\sin^2$-förmigen Intensitätsverlauf mit Phasensprüngen um 180° in den Nullstellen der Intensität aufweist. Durch derartige Gitter 2.1 kann sichergestellt werden, dass Nullstellen der Modulation und Phasensprünge im Intensitätsstreifensystems am Photodetektor 2.2 nicht auftreten können. Die Intensität des Lichts der Lichtquelle 1 nimmt somit nur abhängig vom Abstand u+v von der Lichtquelle 1 bzw. deren Verkippung relativ zum Detektor 2 ab. Bei Verwendung eines geeigneten MAP-Gitters als Gitter 2.1 weist die Lichtintensität des Intensitätsstreifensystems 3 im wesentlichen den gleichen Verlauf wie bei einem Sinusgitter auf. Durch ein geeignetes MAP-Gitter wird der $\sin^2$-förmige Verlauf gut angenähert, wobei das MAP-Gitter in der Herstellung preisgünstiger als ein Sinusgitter ist.

Es sei an dieser Stelle ausdrücklich darauf hingewiesen, dass sich das in der vorliegenden Erfindung verwendete Sinusgitter gemäß obiger Definition von Sinusgittern unterscheidet, die z.B. in bekannten Streifenprojektionssystemen gemäß der DE 197 38 179 C1 eingesetzt werden. So besitzen derartige Sinusgitter üblicherweise einen Verlauf der Transmissions- bzw.

Reflexionsintensität I(x), der sich gemäß $I(x) = I_o * \sin (kx)$ beschreiben lässt. Demgegenüber besitzt das erfindungemäß verwendete Sinusgitter einen Verlauf der Transmisions-Intensität I'(x) gemäß $I'(x) = I_0^2 * \sin^2 (kx)$. Zudem weist das erfindungsgemäß eingesetzte Sinusgitter an den Nullstellen des Intensitätsverlaufes jeweils Phasensprünge von 180° auf.

In Fig. 6 ist ein eindimensionales MAP-Gitter im Schnitt dargestellt. Es sind die lichtundurchlässigen Schichten der Amplitudenteilung AT und die lichtdurchlässigen Schichten der Phasenteilung PT auf einem lichtdurchlässigen Trägermaterial TR, beispielsweise Glas, gezeigt. Dabei ist in jedem zweiten Zwischenraum zwischen zwei Stegen der Amplitudenteilung AT ein Phasensteg für die Phasenteilung PT vorgesehen, welcher eine Phasenverschiebung um 180° beim hindurchstrahlenden Licht bewirkt.

In Fig. 5 ist ein Ausschnitt eines zweidimensionalen MAP-Gitters 2.1 dargestellt. Es weist eine zweidimensionale Amplitudenteilung AT auf, nur die Stellen P11 bis P23 verbleiben lichtdurchlässig. An diesen dann noch lichtdurchlässigen Stellen P11 bis P23 sind jeweils horizontal und vertikal abwechselnd eine Phasenteilung vorgesehen, die einen Phasenhub von 0° bzw. 180° verursacht. An den lichtdurchlässigen Stellen P21, P22 und P23 erfolgt durch die zweidimensionale Phasenteilung ein Phasenhub von 0° und an den schraffierten Stellen P11, P12 und P13 ein Phasenhub von 180°.

Das erfindungsgemäße inkrementale Winkelmesssystem kann auch Referenzmarken aufweisen. Vorteilhaft sind sogenannte gechirpte Referenzmarken, die vorzugsweise im Beugungsbild oder im geometrischen Schattenwurf eingesetzt werden, und die aus einer geeigneten Steganordnung auf dem Gitter 2.1 und einer geeigneten Anordnung einzelner Photoelemente zu einem strukturierten Photodetektor 2.2 bestehen. Alternativ zu mehreren einzelnen Photoelementen kann auch ein Abtastgitter benutzt werden, das auf ein einzelnes Photoelement aufgebracht wird. Bevorzugt wird eine derartige Steg-Lücke-Kombination des Gitters 2.1 gewählt, bei der am Referenzpunkt die Gitterkonstante am kleinsten ist und auf beiden Seiten nach außen anwächst. Dadurch wird berücksichtigt, dass sich die virtuelle Gitterkonstante SP bei variierendem Abtastabstand u zwischen Detektor 2 und Lichtquelle 1 verändern kann.

Im folgenden wird der Photodetektor 2.2 detailliert beschrieben.
Die Detektion der Lage des Intensitätsstreifensystems 3 erfolgt durch den strukturierten Photodetektor 2.2. Ein derartiger strukturierter Photodetektor 2.2 kann - wie bereits beschrieben - auf zwei unterschiedliche Arten realisiert werden. Es kann vor einem einzigen Photoelement ein Gitter angeordnet sein, das lichtdurchlässige und lichtundurchlässige Bereiche aufweist. Alternativ können mehrere, elektrisch getrennte Photoelemente vorgesehen sein, die eine bestimmte Breite und einen bestimmten Abstand voneinander aufweisen, wodurch ebenfalls eine Gitterstruktur realisiert wird. Bevorzugt besteht der Photodetektor 2.2 dabei aus einer Aneinanderreihung von mehreren Einzelphotoelementen in Messrichtung, die bevorzugt auf einem einzigen Substrat realisiert werden. Die elektrische Trennung zwischen den Einzelphotoelementen eines Substrats kann durch eine eindiffundierte Sperre erfolgen. Um die Empfindlichkeit des Photodetektors 2.2 zu erhöhen, werden Einzelphotoelemente im Abstand $d_D$ miteinander leitend verbunden. Der Abstand $d_D$ wird dabei so gewählt, dass dieser Abstand der miteinander verbundenen Einzelphotoelemente - hier als Detektorperiode $d_D$ bezeichnet - mit der Periode $d_I$ des Intensitätsstreifensystems 3 für einen bestimmten Abstand zwischen Lichtquelle 1 und Photodetektor 2.2 übereinstimmt. Durch diese Maßnahme werden an den einzelnen Ausgangsleitungen des strukturierten Photodetektors 2.2 bei einer Bewegung der Lichtquelle 1 phasenversetzte Abtastsignale erzeugt. Der Phasenversatz berechnet sich aus dem Quotienten von 360° durch die Anzahl Einzelphotoelemente pro Periode $d_I$ des Intensitätsstreifensystems 3.

Der Aufbau des strukturierten Photodetektors 2.2 aus den verschiedenen Einzelphotoelementen kann auf die verschiedenartigsten Weisen erfolgen. Denkbar sind Anordnungen, bei denen Einzelphotoelemente parallel zum Intensitätsstreifensystem 3 in der Detektorebene relativ zueinander versetzt sind, was insbesondere bei nicht rechteckig geformten Einzelphotoelementen eine Platzersparnis mit sich bringen kann.

Grundsätzlich sollte die Detektorfläche des strukturierten Photodetektors 2.2 möglichst groß gewählt werden, um eine ausreichende Signalstärke zu gewährleisten und um die Verschmutzungsempfindlichkeit des Winkelmesssystems zu reduzieren. Aufgrund der großen Variation des Abtastabstandes u treten allerdings Änderungen in der Periode $d_I$ des Intensitätsstreifensystems 3 auf dem Photodetektor 2.2 auf. Dies führt bei in Messrichtung großen Ausdehnungen des strukturierten Photodetektors 2.2 zu erheblichen Schwankungen des Modulationsgrades der Abtastsignale. Die Länge des Photodetektors 2.2 in Messrichtung muss daher begrenzt bleiben. Senkrecht zur Messrichtung kann der Photodetektor 2.2 aber eine große Ausdehnung aufweisen.

Alternativ kann der strukturierte Photodetektor 2.2 auch in mehrere Zonen mit jeweils mehreren Einzelphotoelementen aufgeteilt werden, wobei jede Zone eine getrennte Auswerteelektronik aufweist. Die Phasenverschiebungen der Signale aus den einzelnen Zonen, die je nach Abtastabstand u unterschiedlich sind, lassen sich bestimmen und werden korrigiert, so dass die Signale der einzelnen Zonen phasenkorrigiert addiert werden können, wodurch das Nutzsignal verstärkt wird. Daraus wird dann ein gemittelter Positionswert ermittelt. Für die Kompensation der Änderungen in der Periode des Intensitätsstreifensystems 3 auf dem Photodetektor 2.2 kann in der Auswerteelektronik ein sogenannter adaptierter Arcustangens-Rechner verwendet werden. Dieser ermittelt die Phasenverschiebungen zwischen den Ausgangssignalen der Einzelphotoelemente des Photodetektors 2.2, korrigiert sie und berechnet mittels der Arcustangens-Funktion einen gemittelten Positionswert. Zusätzlich lässt sich bei einer Auswertung die Periode der einzelnen Intensitätsstreifen und damit auch der Abstand der Lichtquelle 1 von der Detektoreinheit 2 ermitteln.

Als strukturierten Photodetektor 2.2 können insbesondere Halbleiterdetektoren, vorzugsweise aus Silizium, mit mehreren, auf einem Substrat integrierten Einzelphotoelementen verwendet werden; strukturierte Avalanche-Dioden sind ebenso geeignet. Alternativ lassen sich auch mehrere, nebeneinander angeordnete, diskrete Photodetektoren, z. B. ebenfalls Halbleiterdetektoren oder auch Photomultiplier oder Microchannelplates, einsetzen. In diesem Fall ist ein zusätzliches Abtastgitter vor den diskreten Photodetektoren 2.2 zu verwenden.

Anstelle des strukturierten Photodetektors 2.2 kann auch eine CCD-Zeile eingesetzt werden. Die Auswertung erfolgt dann entweder wie bereits beschrieben oder aber durch eine computergesteuerte Auswertung der aufgenommenen Bilder. Auch hier lässt sich zusätzlich bei einer computergesteuerten Auswertung die Periode der einzelnen Intensitätsstreifen und damit auch der Abstand der Lichtquelle 1 von der Detektoreinheit 2 ermitteln.

Bei Verwendung eines CCD- oder Photoelement-Arrays 2.2 in Verbindung mit einem zweidimensionalen Gitter 2.1, z. B. einem zweidimensionalen Sinusgitter oder rechtwinkligen MAP-Kreuzgitter, wie es in Figur 5 gezeigt ist, kann die genaue Lage der beiden senkrecht zueinander erzeugten Intensitätsstreifensysteme 3 bestimmt werden, so dass mit Hilfe eines einzigen Winkelmesssystems zugleich zwei Winkel gemessen werden können.

Alternativ dazu ist auch eine andere Vorgehensweise beim Einsatz von CCD-Zeilen als Photodetektoren denkbar. Das Auslesen der CCD-Elemente erfolgt hier nicht wie meist üblich sehr schnell im Vergleich zur jeweiligen Messzeit. Stattdessen erfolgt das Weiterreichen der Ladungen in den CCD-Elementen durch eine senkrecht zu den Intensitätsstreifen in der Detektorebene verlaufende Eimerkettenschaltung mit gleichmäßiger Geschwindigkeit, so dass sich die jeweils über den Ort der transportierten Ladung definierte "aktive Fläche" alle Stellen des Intensitätsstreifensystems 3 gleich lange aufhält. Bei zeitlich konstanter Beleuchtung würde dies zu einem konstanten, d.h. unmodulierten Strom am Signalausgang der CCD-Elemente führen. Indem man nun aber die Lichtquelle 1 in ihrer Intensität beispielsweise sinusförmig mit geeigneter Frequenz moduliert, liegt dann am Signalausgang der CCD-Elemente ebenfalls ein moduliertes Signal an, aus dessen Phasenbeziehung zum Eingangssignal der Lichtquelle 1 sich der Winkel der Lichtquelle 1 relativ zur Detektoreinheit 2 ermitteln lässt.

Ein Vorteil der beschriebenen Technik besteht vor allem darin, dass zeitlich konstante Unterschiede wie unterschiedliche Streulichtbedeckungen, Empfindlichkeiten, Öffnungen etc. der einzelnen lichtempfindlichen Elemente durch die Bewegung der jeweils "aktiven Detektorfläche" teilweise oder vollständig neutralisiert werden und entsprechend zu keinem Winkelmessfehler führen. Auch Fehlerbeiträge durch die Auswertelektronik werden minimiert, da alle Signale die gleiche Elektronik durchlaufen. Weiterhin können Signaloffsets leicht mittels Hochpassfilterung eliminiert werden.

Um diese Technik für alle Abstände u zwischen Lichtquelle 1 und Detektoreinheit 2 einsetzen zu können, kann es erforderlich sein, die Modulationsfrequenz der Lichtquelle 1 bzw. die Auslesetaktrate der CCD-Zeile jeweils dem momentanen Abstand u zwischen der Lichtquelle 1 und dem Detektor 2 in Form der CCD-Zeile anzupassen. Photoelementarrays, vorteilhaft in CMOS-Technik realisiert, mit nachgeschalteten Multiplexern, stellen in diesem Zusammenhang eine äquivalente Realisierung zu den CCD-Zeilen dar. Dabei erfolgt die Auswahl eines Ausgangssignals eines Photoelements entsprechend der Auslesetaktrate der CCD-Zeite.

Im folgenden wird die Auswertelektronik beschrieben.

Durch die nachfolgende Auswerteelektronik kann der Verstärkungsfaktor, mit dem die Strahlungsleistung der Lichtquelle 1 eingestellt wird, so geregelt werden, dass die Intensitätsschwankungen des Intensitätsstreifensystems 3 aufgrund wechselnder Abstände u zwischen Lichtquelle 1 und Photodetektor 2.2 oder einer Verdrehung bzw. Verkippung von Lichtquelle 1 zu Photodetektor 2.2 relativ zueinander zumindest im wesentlichen ausgeglichen werden. Weiterhin verstärkt die Auswerteelektronik die Ausgangssignale des strukturierten Photodetektors 2.2. Diese Verstärkung erfolgt bevorzugt durch einen besonders rauscharmen Verstärker unmittelbar nach der Detektion, da die Amplitude des Ausgangssignals der Einzelphotoelemente sehr klein sein kann und eine Übertragung über zusätzliche Leitungen Störungen verursachen können. Anschließend erfolgt eine Analog/Digital-Wandlung der Abtastsignale, nach bzw. bei der eine erneute Verstärkung erfolgen kann. Danach erfolgt eine Umrechnung der digitalen Abtastsignale des Intensdätsstreifensystems 3 in Positionswerte mittels der Arcustangens-Funktion, die durch einen Arcustangens-Rechner oder mittels einer gespeicherten Werte-Tabelle erfolgen kann. Die Positionswerte geben die Winkellage der Lichtquelle 1 relativ zur Detektoreinheit 2 und somit die Lage von Werkzeug relativ zum Werkstück an.

Störendes Untergrundlicht kann durch Wellenlängenfilter reduziert oder unterdrückt werden. Darüber hinaus können Modulationstechniken eingesetzt werden, bei denen die Strahlungsleistung der Lichtquelle 1 periodisch moduliert wird und die Detektorelektronik diese Modulation mit geeigneten Filtern, z.B. Bandpassfiltern, detektiert. Dabei muss in der Regel die Modulationsfrequenz erheblich höher gewählt werden als die maximale Signalfrequenz aufgrund einer Verschiebung von Lichtquelle 1 und Detektor 2 relativ zueinander. Außerdem bewirkt eine Quasi-Einfeldabtastung bei Verwendung eines strukturierten Photodetektors 2.2, dass eine lokal homogene Streulichtverteilung bei geeigneter Auswertung, beispielsweise mit vier um 90° verschobenen Phasenlagen, das Messergebnis nicht oder nur unwesentlich verändert.

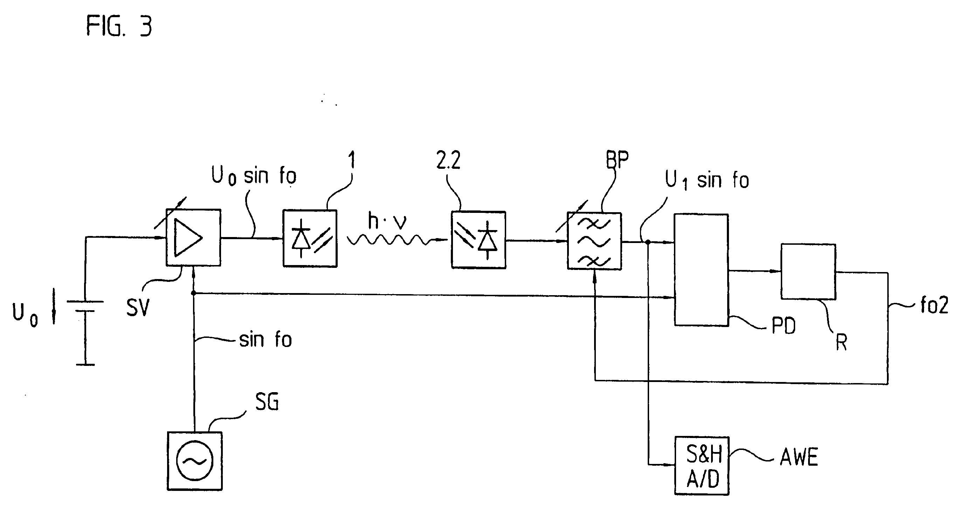

Bei besonders hohen Anforderungen an die Qualität des Signals kann die bekannte Phase-Locked-Loop (PLL) Technik oder auch die Lock-In Technik verwendet werden, wie in Fig. 3 gezeigt. Dabei wird die der Lichtquelle 1 zugeleitete Leistung durch einen steuerbaren Verstärker SV derart beeinflusst, dass die von der Lichtquelle 1 emittierte Strahlungsleistung einen sinus-förmigen zeitlichen Verlauf mit der Frequenz $f_0$ aufweist. Das dafür benötigte Steuersignal liefert ein Signalgenerator SG. Die von der Lichtquelle 1 divergent abgestrahlte Strahlungsleistung wird zusammen mit Streulicht im Photodetektor 2.2 detektiert. Das Ausgangssignal des Photodetektors 2.2 kann optional verstärkt werden. Anschließend wird dieses Signal einem Bandpass BP zugeleitet, der auf die Frequenz $f_0$ der von der Lichtquelle 1 empfangenen Strahlungsleistung abgestimmt ist bzw. eingestellt wird.

Zur Einstellung der Bandpassfrequenz wird das Ausgangssignal des Bandpasses BP einem Phasendiskriminator PD zugeleitet, dem auch das Ausgangssignal des Signalgenerators SG zugeleitet wird. Das Ausgangssignal des Phasendiskriminators PD wird einem geeigneten Regler R zugeleitet, der ein Steuersignal für den Bandpass BP erzeugt, um diesen genau auf die Frequenz $f_0$ abzustimmen, mit der die Intensität der Strahlung der Lichtquelle 1 moduliert wird. Derart kann sichergestellt werden, dass das Ausgangssignal des Bandpasses BP, das der weiteren Auswerteelektronik AWE des Winkelmesssystems zugeleitet wird, im wesentlichen von der Lichtquelle 1 stammt.

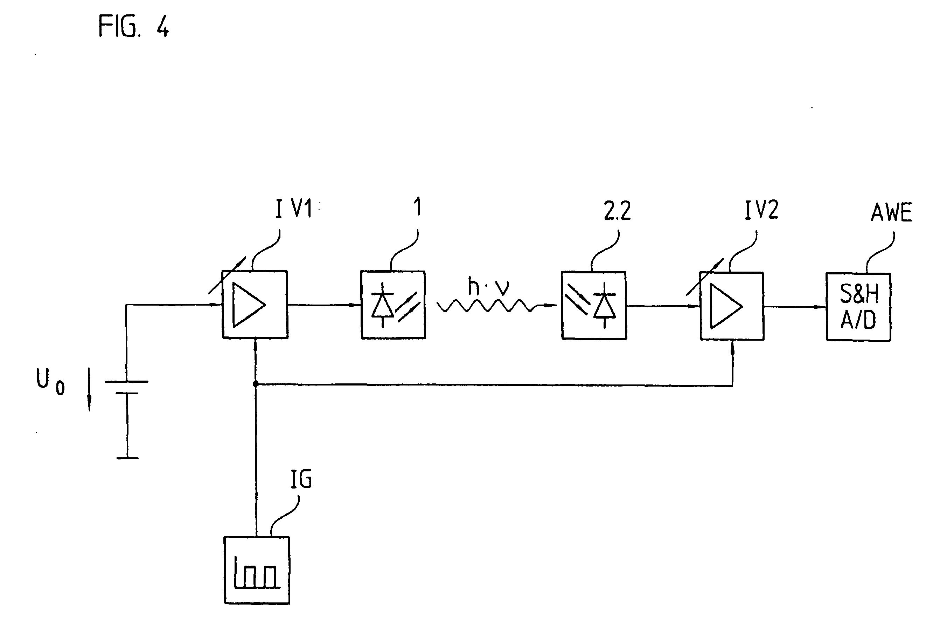

Noch vorteilhafter erscheint die Boxcar-Technik, die in Fig. 4 dargestellt ist. Hier wird durch einen Impulsgenerator IG ein Verstärker IV1 angesteuert, durch den die der Lichtquelle 1 zugeleitete Leistung moduliert wird. Das dadurch entstehende impulsförmige Ausgangssignal der Lichtquelle 1 wird vom Photodetektor 2.2 zusammen mit Streulicht detektiert. Die zeitlich begrenzte Öffnungszeit eines anschließenden integrierenden Ladungsverstärkers IV2 wird durch das gleiche Ausgangssignal des Impulsgenerators IG gesteuert, das bereits für den Verstärker IV1 benutzt wird. Durch die Synchronisation von Verstärker 1V1 und Verstärker IV2 wird bewirkt, dass nur in dem Zeitintervall, in dem die Lichtquelle 1 strahlt, eine Verstärkung des Ausgangssignals des Photodetektors 2.2 erfolgt. Das Ausgangssignal des integrierenden Ladungsverstärkers IV2 wird dann der anschließenden Auswerteelektronik AWE des Winkelmesssystems zugeleitet. Dadurch ist sichergestellt, dass nur in den Zeitschlüzen, in denen die Lichtquelle 1 Strahlung emittiert, auch eine Auswertung der im Photodetektor 2.2 empfangenen Strahlung erfolgt. In diesem Fall sind die Verzögerungszeiten zwischen der Triggerung der Positionsmessung und der tatsächlichen Bestimmung der Position äußerst gering. Damit sind auch die dynamischen Positionsfehler stark reduziert und vernachlässigbar.

Einerseits ist für jede einzelne Winkelmessung eine möglichst lange Messzeit zur Mittelung über das unvermeidbaren Signalrauschen wünschenswert. Andererseits begrenzt aber bei hohen Verfahrgeschwindigkeiten der dann stark anwachsende dynamische Fehler die Messdauer. Deshalb kann vorteilhaft bei dem beschriebenen Winkelmesssystem eine Auswertelektronik mit umschaübarer oder variabler elektronischer Analogbandbreite eingesetzt werden. Durch Veränderung der Analogbandbreite wird bei niedrigen Verfahrgeschwindigkeiten eine hohe Genauigkeit aufgrund einer langen Mittelungszeit erzielt, während bei hohen Verfahrgeschwindigkeiten zwar ein höherer Rauschfehler aufgrund kurzer Messzeiten entsteht, aber dafür der hier dominierende dynamische Fehler klein gehalten wird. Entsprechend lassen sich natürlich auch zwei oder mehrere Auswerteelektroniken unterschiedlicher fester Analogbandbreite zum gleichen Zweck einsetzen. Bei Verwendung mehrerer Auswerteelektroniken können für jede einzelne eigene strukturierte Photoelemente vorgesehen werden.

In der Auswerteelektronik kann auch eine Online-Korrektur von Signalfehlern und Oberwellen im Empfangssignal erfolgen. Bei der Online-Korrektur kann beispielsweise aus dem Ausgangssignal des Photodetektors 2.2 und dem um 90° versetzen Ausgangssignal des Photodetektors 2.2 eine Lissajous-Figur gebildet wird. Dabei wird das Ausgangssignal des Photodetektors 2.2 dadurch erzeugt, dass die Ausgangssignale der Einzelphotoelemente mit 180° Phase von denen mit 0° Phase subtrahiert werden; das um 90° versetzte Ausgangssignal des Photodetektors 2.2 wird dadurch erzeugt, dass die Ausgangssignal der um 270° versetzten Einzelphotoelemente von dem Ausgangssignal der Einzelphotoelemente mit 90° Phase subtrahiert werden. Für die Erzeugung der Lissajous-Figur werden Abtastwerte des Ausgangssignals des Photodetektors 2.2 als Koordinaten einer ersten Achse und Abtastwerte des um 90° versetzten Ausgangssignals als Koordinaten einer zur ersten orthogonalen zweiten Achse benutzt. Die Abweichungen der derart erzeugten Lissajous-Figur von einem Kreis um den Nullpunkt des durch die beiden Achsen gebildeten zweidimensionalen Koordinatensystems werden ermittelt und daraus zu korrigierende Offsets, Phasenabweichungen und ein fehlerhaftes Amplitudenverhältnis der beiden um 90° versetzten Signale bestimmt. Vorteilhaft wird diese Kompensation während dem herkömmlichen Betrieb in Echtzeit durchgeführt.

Im folgenden wird eine mögliche Erweiterung des Winkelmesssystems zu einem Positionsmesssystem beschrieben. Um letztendlich eine Positionsbestimmung durchführen zu können, müssen mehrere Winkelmesssysteme miteinander verknüpft werden. Hierbei kann eventuell eine Mehrfachnutzung von Lichtquellen 1 oder Detektoren 2 erfolgen, d. h. dieselbe Lichtquelle 1 oder Detektoreinheit 2 ist Bestandteil von zwei oder mehr Winkelmesssystemen. Wird eine Lichtquelle 1 in mehreren Winkelmesssystemen benutzt, ist dies unproblematisch.

Im Fall einer Mehrfachnutzung von Detektoren 2, kann eine zeitliche Trennung der Beiträge von den verschiedenen Lichtquellen 1 sinnvoll sein. Dies kann derart realisiert werden, dass die Lichtquellen 1 unterschiedlicher Winkelmesssysteme in unterschiedlichen Zeitschlitzen eines Zeitmultiplex betrieben werden und in der Auswerteelektronik des gemeinsamen Detektors 2 das Zeitmultiplex-Schema der Lichtquellen 1 bekannt ist. Bei den Lichtquellen 1 besteht weiterhin die Möglichkeit, dass sie mit unterschiedlichen Trägerfrequenzen in ihrer Intensität moduliert werden, so dass durch entsprechende Demodulatoren oder Bandpassfilter in der Auswerteeinheit des Detektors 2 die Signalanteile einzelnen Lichtquellen zugeordnet werden können.

In manchen Fällen wird es sinnvoll sein, die Anzahl der Winkelmesssysteme größer zu wählen, als theoretisch erforderlich, da Redundanz die Störsicherheit und Genauigkeit des Messsystems erhöht. Außerdem könnte die Situation auftreten, dass an bestimmten räumlichen Positionen einzelne der Winkelmesssysteme nur ungenügende Ergebnisse liefern, z. B. zwischen Talbotebenen oder aufgrund geometrischer Abschattung.

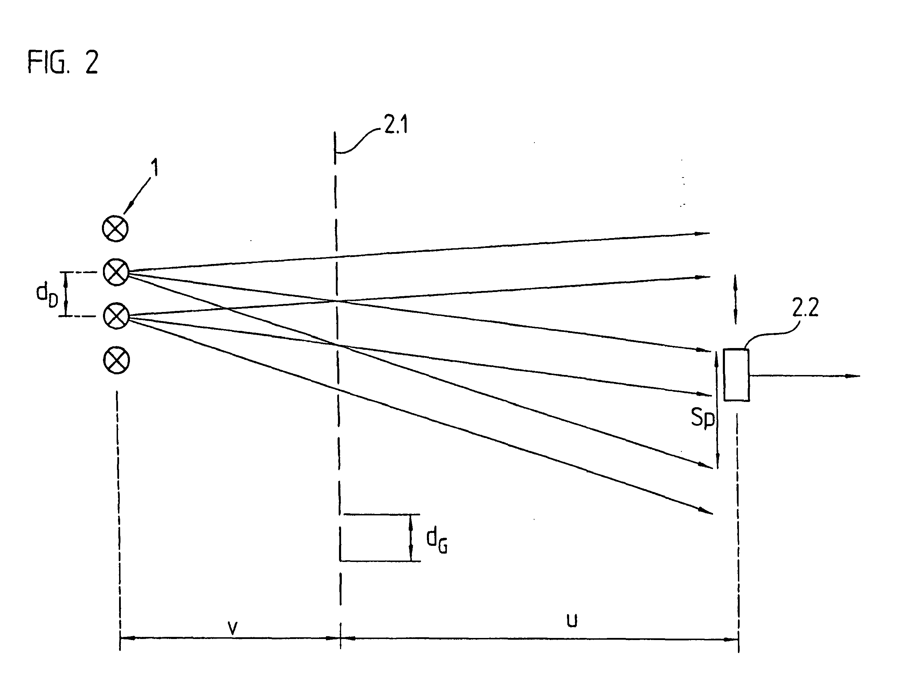

Weiterhin können an unterschiedlichen Stellen Einzeilichtquellen positioniert werden, um die Lichtquelle 1 zu realisieren und um Messsignale verschiedener Phasenlage zu erzeugen. Dann ist ein einzelnes Photoelement im Detektor 2 ausreichend, wie zu Fig. 2 im folgenden näher ausgeführt wird. Allerdings müssen dann die Signalbeiträge der verschiedenen Einzellichtquellen voneinander getrennt werden, was geometrisch, zeitlich oder durch Farb- bzw. Polarisationscodierung erfolgen kann.

Fig. 2 zeigt ein zweites, alternatives Ausführungsbeispiel des erfindungsgemäßen Winkelmesssystems. Dieses unterscheidet sich im wesentlichen von dem ersten Ausführungsbeispiel dadurch, dass im Vergleich hierzu Lichtquelle 1 und Photodetektor 2.2 gegeneinander vertauscht sind. Ein am beweglichen Objekt befindlicher Photodetektor 2.2 detektiert jetzt das von einer Lichtquelleneinheit 1 in den Raum gestrahlte Licht. Die Lichtquelleneinheit 1 besteht hierbei analog zur Detektionseinheit 2 im ersten Ausführungsbeispiel aus mehreren, z. T. getrennt ansteuerbaren Einzellichtquellen und einem Gitter 2.1 der Gitterkonstante $d_G$.

Das Gitter 2.1 weist dabei zu den Einzellichtquellen eine feste räumliche Zuordnung auf. Die Ansteuerung einer bestimmten Einzellichtquelle führt nun zur Ausbildung eines Intensitätsstreifenmusters 3 mit der (vom Abstand u abhängigen) Periode SP im Raum. Indem man die Einzellichtquellen der Lichtquelleneinheit 1 so anordnet und ansteuert, dass die von ihnen jeweils unmittelbar nacheinander in den Raum projizierten Intensitätsstreifensysteme 3 eine bestimmte, bekannte Phasenbeziehung zueinander besitzen, kann dann aus den am Photodetektor 2.2 ermittelten Lichtintensitäten der verschiedenen Einzellichtquellen die momentane Winkelposition des Detektors 2 relativ zur Lichtquelleneinheit 1 ermittelt werden.

Die Lichtquelleneinheit 1 kann beispielsweise vier äquidistant angeordnete Laserdioden oder Leuchtdioden beinhalten, deren Intensitätsstreifensysteme 3 im Raum gerade um eine Phase von 90° relativ zueinander verschoben sind. Werden einzelne Leuchtdioden unmittelbar nacheinander angesteuert und die am Photodetektor 2.2 auftreffenden Lichtleistungen gemessen, so kann aus den verstärkten und analog/digital gewandelten Abtastsignalen mittels eines Arcustangens-Rechners oder einer entsprechenden Tabelle zur Umrechnung wieder die Winkellage des Photoelements 2.2 relativ zur Lichtquelle 1 ermittelt werden.

Zur Erhöhung der Strahlungsleistung der Lichtquelleneinheit 1 können großflächige Leuchtdioden benutzt werden, auf die unmittelbar ein Gitter 2.1 aufgebracht ist. Alternativ können auch strukturierte Leuchtdioden oder einzelne längliche Leuchtdioden, die parallel zum Gitter 2.1 ausgerichtet sind, benutzt werden.

Eine günstige Konfiguration für dieses alternative Winkelmesssystem ist beispielsweise durch folgende Dimensionierung gegeben:

| | |
|---|---|
| Abtastabstand u von Photoelement zur Sendeeinheit | 0,5-1,5 m |
| Abstand v von Gitter zu den Einzellichtquellen | 80 mm |
| Gitterkonstante $d_G$ des Gitters (geometrisches Bild bzw. Beugungsbild) | 148 $\mu$m / 296 $\mu$m |
| Abstand der Einzellichtquellen | 40 $\mu$m |
| Ausdehnung des Photoelements | 400 $\mu$m |
| Signalperiode $SP_0$ im Abtastabstand $u_0$=1m | 2 mm |
| Zahl der Einzellichtquellen | 4 oder 8 |
| Phasenwinkel zwischen den Einzellichtquellen | 90° |
| Ausdehnung der Einzellichtquellen | $\leq$ 100 $\mu$m |

Zur Ausgestaltung dieses zweiten Ausführungsbeispiels lassen sich alle im Zusammenhang mit dem ersten Ausführungsbeispiels beschriebenen Ausgestaltungsmöglichkeiten sinngemäß übertragen. Insbesondere gilt das für den Einsatz verschiedener Lichtquelleneinheit 1, Gitter 2.1 und Photodetektoren 2.2.

Bei diesem zweiten Ausführungsbeispiel des erfindungsgemäßen Winkelmesssystems ist es nicht zwingend erforderlich, dass die Einzellichtquellen tatsächlich zeitlich nacheinander betrieben bzw. die Signale der Einzellichtquellen zeitlich nacheinander detektiert werden. Stattdessen können sich die von ihnen ausgestrahlten bzw. vom Photoelement 2.2 detektierten Intensitätsstreifenmuster 3 auch zeitlich überlappen. In diesem Fall werden die verschiedenen Einzellichtquellen in ihren Intensitäten zeitlich beispielsweise sinusförmig moduliert, wobei die Ansteuerung der einzelnen Lichtquellen jeweils zeitlich phasenverschoben erfolgt. Dies hat zur Folge, dass das vom Photoelement 2.2 detektierte Signal ebenfalls zeitlich moduliert ist, wobei die Phasenverschiebung relativ zur Ansteuerung der einzelnen Lichtquellen wiederum ein Maß für den Winkel des Photoelements 2.2 relativ zur Lichtquelle 1 ist.

Können in bestimmten Anwendungsfällen keine Drehungen des Detektors 2 um die Verbindungsachse zur Lichtquelle 1 auftreten, so muss das Photoelement 2.2 nicht die andernfalls erforderliche hohe Symmetrie besitzen. Dann kann der Photodetektor 2 sich wiederum aus Einzelelementen zusammensetzen, von denen jedes (z. B. durch Farbfilter etc.)

dafür ausgelegt ist, das Licht einer bestimmten Einzellichtquelle zu detektieren. In diesem Fall muss dann natürlich die Messung der den Photodetektor 2 erreichenden Strahlungsintensität nicht für jede Einzellichtquelle zeitlich nacheinander erfolgen, sondern kann gleichzeitig geschehen, was den Vorteil hat, dass die Einzellichtquellen kontinuierlich betrieben werden können.

In einer weiteren Ausgestaltung der Erfindung werden Lichtquelle 1 und Detektor 2 unmittelbar benachbart an einem ersten Objekt angeordnet. An dem zweiten Objekt, zu dem die relative Winkeländerung gemessen werden soll, wird ein retroreflektierendes Element angeordnet, das die Lichtstrahlung geringfügig versetzt in Richtung der Lichtquelle reflektiert. Als retroreflektierendes Element kann beispielsweise ein Tripelspiegel, ein Tripelprisma, ein Retroreflektor, ein Dachkantprisma oder eine Linse kombiniert mit einem in der Brennebene angeordneten Spiegel benutzt werden. Dies weist den Vorteil auf, dass nur die an einem Objekt angeordneten Baugruppen Lichtquelle 1 und Detektor 2 elektrische Verbindungsleitungen erfordern, das retroreflektierende Element diese aber nicht benötigt.

## Patentansprüche

1.  Winkelmesssystem zur berührungslosen Bestimmung eines Winkels zwischen zwei zueinander bewegbaren Objekten, wobei jedes der Objekte mit einer Baugruppe des Winkelmesssystems verbunden ist und die erste Baugruppe eine Lichtquelle (1), die zweite Baugruppe einen Photodetektor (2.2) umfasst und entweder der ersten oder der zweiten Baugruppe ferner ein Gitter (2.1) zugeordnet ist, welches als kombiniertes Amplituden-Phasengitter ausgebildet ist.

2.  Winkelmesssystem zur berührungslosen Bestimmung eines Winkels zwischen zwei zueinander bewegbaren Objekten, wobei jedes der Objekte mit einer Baugruppe des Winkelmesssystems verbunden ist und die erste Baugruppe eine Lichtquelle (1) und einen Photodetektor (2.2) umfasst, die zweite Baugruppe einen retroreflektierendes Element umfasst und entweder der ersten oder der zweiten Baugruppe ferner ein Gitter (2.1) zugeordnet ist, welches als kombiniertes Amplituden-Phasengitter ausgebildet ist.

3.  Winkelmesssystem nach Anspruch 1 oder 2, wobei das Gitter (2.1) einen $\sin^2$-förmigen Verlauf der Transmissionsintensität aufweist und in den Nullstellen des Transmissionsintensitäts-Verlaufes Phasensprünge von 180° vorliegen.

4.  Winkelmesssystem nach Anspruch 3, wobei das Gitter (2.1) ein lichtdurchlässiges Trägermaterial (TR) umfasst, auf dem lichtundurchlässige Schichten einer Amplitudenteilung (AT) sowie lichtdurchlässige Schichten einer Phasenteilung (PT) angeordnet sind.

5.  Winkelmesssystem nach Anspruch 4, wobei auf Seiten des Gitters (2.1) in jedem zweiten Zwischenraum zwischen zwei Stegen der Amplitudenteilung (AT) ein Phasensteg der Phasenteilung (PT) angeordnet ist, welcher beim hindurchstrahlenden Licht eine Phasenverschiebung um 180° bewirkt.

6.  Winkelmesssystem nach Anspruch 4, wobei auf Seiten des Gitters zwischen lichtundurchlässigen Stegen der Amplitudenteilung Phasenstege der Phasenteilung angeordnet sind, die eine Phasenverschiebung des durchstrahlenden Lichtes um 180° bewirken.

7.  Winkelmesssystem nach Anspruch 3, wobei das Gitter (2.1) eine zweidimensionale Amplitudenteilung (AT) aufweist, in der nur bestimmte Stellen (P11 - P23) lichtdurchlässig sind, wobei an den noch lichtdurchlässigen Stellen (P11 - P23) jeweils horizontal und vertikal abwechselnd eine Phasenteilung angeordnet ist, die einen Phasenhub von 0° oder 180° verursacht.

8.  Winkelmesssystem nach Anspruch 1, wobei das Gitter (2.1) der zweiten Baugruppe zugeordnet ist und das Gitter (2.1) zum Photodetektor (2.2) in einer räumlich feststehenden Beziehung angeordnet ist und der Abstand (u) zwischen Lichtquelle (1) und Gitter (2.1) wesentlich größer ist als der Abstand (v) zwischen Gitter (2.1) und Photodetektor (2.2).

9.  Winkelmesssystem nach Anspruch 1 oder 2, wobei der Photodetektor (2.2) als strukturierter Photodetektor (2.2) ausgestaltet ist, der mehrere Einzelphotoelemente umfasst, die parallel zu einem durch Lichtquelle (1) und optisches Gitter (2.1) erzeugten Intensitätsstreifensystem (3) angeordnet sind.

10. Winkelmesssystem nach Anspruch 9, bei dem für einen bestimmten Abstand (u) zwischen Lichtquelle(1) und Photodetektor (2) zumindest die gemittelte Periode ($d_l$) des Intensitätsstreifenmusters auf dem Photodetektor (2.2) ein ganzzahliges Vielfaches der Periode der Strukturierung des strukturierten Photodetektors (2.2) ist.

**11.** Winkelmesssystem nach Anspruch 1 mit einem regelbaren Verstärker (SV), welcher die der Lichtquelle (1) zugeleitete Leistung abhängig von der im Photodetektor (2.2) detektierten Leistung regelt.

**12.** Winkelmesssystem nach Anspruch 1, wobei die Lichtquelle (1) derart ausgestaltet ist, dass für jede mögliche Stellung der Lichtquelle (1) relativ zum Photodetektor (2.2) der Emissionsschwerpunkt der Lichtstrahlen an der gleichen Stelle liegt.

**13.** Winkelmesssystem nach Anspruch 12, wobei die Lichtquelle (1) kugelförmig ist.

**14.** Winkelmesssystem nach Anspruch 12, wobei die Lichtquelle (1) zumindest abschnittsweise flächig ist.

**Claims**

**1.** Angle measuring system for the contactless determination of an angle between two objects, which are movable relative to one another, wherein each of the objects is connected to a component of the angle measuring system, and the first component comprises a light source (1), the second component comprises a photodetector (2.2), and in addition a grating (2.1) configured as a combined amplitude-phase grating is associated with either the first or the second component.

**2.** Angle measuring system for the contactless determination of an angle between two objects, which are movable relative to one another, wherein each of the objects is connected to a component of the angle measuring system, and the first component comprises a light source (1) and a photodetector (2.2), the second component comprises a retro-reflecting element, and in addition a grating (2.1) configured as a combined amplitude-phase grating is associated with either the first or the second component.

**3.** Angle measuring system according to Claim 1 or 2, wherein the grating (2.1) has a $sine^2$-shaped transmission intensity pattern, and phase shifts of 180° are present in the zero points of the transmission intensity pattern.

**4.** Angle measuring system according to Claim 3, wherein the grating (2.1) comprises a transparent carrier material (TR), on which opaque layers of an amplitude graduation (AT) as well as transparent layers of a phase graduation (PT) are arranged.

**5.** Angle measuring system according to Claim 4, wherein a phase strip of the phase graduation (PT) is arranged on the grating (2.1) side in each second space between two strips of the amplitude graduation (AT), and causes a phase shift of 180° of the light passing through.

**6.** Angle measuring system according to Claim 4, wherein phase strips of the phase graduation are arranged on the grating side between opaque strips of the amplitude graduation, and cause a phase shift of 180° of the light passing through.

**7.** Angle measuring system according to Claim 3, wherein the grating (2.1) has a two-dimensional amplitude graduation (AT), in which only defined areas (P11 - P23) are transparent, wherein a phase graduation is alternately arranged respectively horizontally and vertically at the still transparent areas (P11 - P23), and causes a phase deviation of 0° or 180°.

**8.** Angle measuring system according to Claim 1, wherein the grating (2.1) is associated with the second component, and the grating (2.1) is arranged in a fixed spatial relationship to the photodetector (2.2), and the distance (u) between the light source (1) and the grating (2.1) is substantially greater than the distance (v) between the grating (2.1) and the photodetector (2.2).

**9.** Angle measuring system according to Claim 1 or 2, wherein the photodetector (2.2) is configured as a structured photodetector (2.2), which comprises a plurality of individual photocells, which are arranged parallel to an intensity strip system (3) generated by the light source (1) and the optical grating (2.1).

**10.** Angle measuring system according to Claim 9, wherein for a defined distance (u) between the light source (1) and the photodetector (2), at least the averaged period ($d_l$) of the intensity strip pattern on the photodetector (2.2) is an integral multiple of the period of the structuring of the structured photodetector (2.2).

11. Angle measuring system according to Claim 1 with a controllable amplifier (SV), which regulates the power conducted to the light source (1) as a function of the output detected in the photodetector (2.2).

12. Angle measuring system according to Claim 1, wherein the light source (1) is configured in such a way that for every possible position of the light source (1) relative to the photodetector (2.2), the emission centre of the light beams lies at the same location.

13. Angle measuring system according to Claim 12, wherein the light source (1) is spherical.

14. Angle measuring system according to Claim 12, wherein the light source (1) is flat at least in sections.

**Revendications**

1. Système pantomètre pour la détermination sans contact d'un angle entre deux objets mobiles l'un par rapport à l'autre et dont chacun est lié à un groupe constructif du système pantomètre, le premier groupe constructif comprenant une source lumineuse (1), tandis que le second groupe constructif comprend un photodétecteur (2.2), avec de plus, associé au premier ou au second groupe constructif, un réseau (2.1) qui est un réseau combiné d'amplitude/phase.

2. Système pantomètre pour la détermination sans contact d'un angle entre deux objets mobiles l'un par rapport à l'autre et dont chacun est lié à un groupe constructif du système pantomètre, le premier groupe constructif comprenant une source lumineuse (1) et un photodéteur (2.2), tandis que le second groupe constructif comprend un élément rétroréfléchissant, avec de plus, associé au premier ou au second groupe constructif, un réseau (2.1) qui est un réseau combiné d'amplitude/phase.

3. Système pantomètre selon la revendication 1 ou 2, **caractérisé en ce que** le réseau (2.1) présente une courbe d'intensité de transmission en forme de $\sin^2$ aux points zéro de laquelle il y a des sauts de phase de 180°.

4. Système pantomètre selon la revendication 3, **caractérisé en ce que** le réseau (2.1) comprend un matériau porteur (TR) transparent à la lumière sur lequel sont placées des couches transparentes à la lumière d'une division d'amplitude (AT) ainsi que des couches transparentes à la lumière d'une division de phase (PT).

5. Système pantomètre selon la revendication 4, **caractérisé en ce que** sur des faces du réseau (2.1), dans chaque espace intermédiaire séparant deux barrettes de la division d'amplitude (AT) se trouve une barrette de phase de la division de phase (PT) qui produit un déphasage de 180° quand elle est traversée par la lumière.

6. Système pantomètre selon la revendication 4, **caractérisé en ce que** sur des faces du réseau, entre des barrettes transparentes à la lumière de la division d'amplitude, se trouvent des barrettes de la division de phase qui dévient de 180° la phase de la lumière traversante.

7. Système pantomètre selon la revendication 3, **caractérisé en ce que** le réseau (2.1) présente une division d'amplitude (AT) à deux dimensions, dans laquelle seuls certains endroits (P11 - P23) sont transparents à la lumière, endroits sur lesquels est montée horizontalement et verticalement avec alternance une division de phase qui produit une amplitude de déphasage de 0° ou de 180°.

8. Système pantomètre selon la revendication 1, **caractérisé en ce que** le réseau (2.1) est associé au second groupe constructif et il est en relation fixe dans l'espace avec le photodétecteur (2.2), la distance (u) entre la source lumineuse (1) et le réseau (2.1) étant nettement supérieure à la distance (v) entre le réseau (2.1) et le photodétecteur (2.2).

9. Système pantomètre selon la revendication 1 ou 2, **caractérisé en ce que** le photodétecteur (2.2) est un photodétecteur structuré comprenant plusieurs photoéléments individuels disposés parallèlement à un système de bandes d'intensité (3) produit par la source lumineuse (1) et le réseau optique (2.1).

10. Système pantomètre selon la revendication 9, **caractérisé en ce que** pour une distance définie (u) entre la source lumineuse (1) et le photodétecteur (2.2), au moins la période moyenne ($d_l$) du modèle de bandes d'intensité sur le photodétecteur (2.2) est un multiple entier de la période de structuration du photodétecteur structuré (2.2).

11. Système pantomètre selon la revendication 1, **caractérisé en ce qu'**il comporte un amplificateur réglable (SV) qui règle la puissance envoyée à la source de lumière (1) en fonction de la puissance détectée dans le photodétecteur (2.2).

12. Système pantomètre selon la revendication 1, **caractérisé en ce que** la source lumineuse est configurée de manière que pour toute position possible de la source de lumière (1) par rapport au photodétecteur (2.2), le centre de gravité de l'émission des rayons lumineux se trouve au même endroit.

13. Système pantomètre selon la revendication 12, **caractérisé en ce que** la source lumineuse (1) a une forme conique.

14. Système pantomètre selon la revendication 12, **caractérisé en ce que** la source lumineuse (1) est plate au moins localement.

FIG. 1

FIG. 2

2.2

Sp

2.1

u

$d_G$

v

1

$d_D$

FIG. 3

FIG. 4

I V1       1       2.2       IV2       AWE

$h \cdot \nu$

S&H
A/D

$U_0$

IG

EP 1 236 023 B1

FIG. 5

P11  P22  P13

P21  P12  P23

FIG. 6

PT

AT

TR